# EUROPEAN PATENT SPECIFICATION

(11) **EP 0 454 426 B1**
(45) Date of publication and mention of the grant of the patent: **10.06.1998**
(21) Application number: 91303661.2
(22) Date of filing: 24.04.1991
(51) Int. Cl.: C09J 7/02, C09J 133/06

(54) **Adhesive-backed film composite which can become permanently bonded to a plasticized substrate**
Mit Klebstoff beschichteter Kompositfilm, der mit einem plastifizierten Substrat dauernd verbunden werden kann
Film composite à revêtement adhésif susceptible d'adhésion permanente à un substrat plastifié

(30) Priority: 24.04.1990 US 513679
(43) Date of publication of application: 30.10.1991
(73) Proprietor: MINNESOTA MINING AND MANUFACTURING COMPANY, St. Paul, Minnesota 55133-3427 (US)
(72) Inventor: Paquette, Susan Z., c/o Minnesota Mining and, St. Paul, Minnesota 55133-3427 (US); Crandall, Michael D., c/o Minnesota Mining and, St. Paul, Minnesota 55133-3427 (US)
(74) Representative: Baillie, Iain Cameron

(56) References cited:
- EP-A- 0 103 407
- US-A- 3 547 852
- US-A- 4 925 908

## Description

The invention is concerned with a flexible, adhesive-backed film composite that has an adhesive layer by which it can become permanently bonded to substrates containing migratable monomeric plasticizers, in spite of the tendency of such plasticizers to migrate into and to soften the adhesive. The invention is particularly concerned with the adhesive layer of such a film composite.

### Description of the Related Art

As is pointed out in U.S. Pat. No. 4,605,592 (Paquette et al.), highly plasticized vinyl substrates previously had been decorated by hand painting or air brushing screen-printing inks. While prefabricated graphics in the form of adhesive-backed vinyl film bearing screen-printed graphics would have been less expensive, they had not been adapted for such use "due to the wrinkling of the vinyl film and loss of adhesion to the vinyl substrate ... attributable, at least in part, to the migration of monomeric plasticizers from the vinyl substrate into the vinyl film and adhesive" (col. 1, lines 24-33). These vinyl substrates contain as much as 25-100 parts of monomeric plasticizer, usually dioctylphthalate, to 100 parts of vinyl resin.

In general, low-cost monomeric plasticizers are more migratory than are those of higher cost, so that attempts by manufacturers of plasticized substrates to economize often exacerbate the problem of adhering a decorative, adhesive-backed flexible film to those substrates.

The Paquette patent provides a decorative, adhesive-backed vinyl film composite that is capable of maintaining adhesion and remaining substantially wrinkle free when adhered to vinyl substrates that contain migratable monomeric plasticizer. The decorative film composite of the Paquette patent has (1) a polyvinyl chloride film layer that preferably is receptive to screen printing inks, (2) a layer of a plasticizer-resistant pressure-sensitive adhesive, e.g., a terpolymer of by weight 52.5 parts of n-butylacrylate, 37.5 parts methyl acrylate, and 10 parts acrylic acid, and (3) an intermediate, migratable-plasticizer barrier layer such as an aliphatic polyurethane resin. After being coated and dried, the adhesive can be crosslinked, e.g., by exposure to UV radiation when it contains a photocrosslinker such as benzophenone, thus making the adhesive layer more resistant to any plasticizer that migrates from a vinyl substrate. The pressure-sensitive adhesives of the examples of the Paquette patent are polymerized in solution and coated from solution.

US-A-3,547,852 discloses a pressure-sensitive aqueous emulsion adhesive of 2-ethylhexyl acrylate, vinyl acetate and acrylic acid, whose net effect when the adhesive is applied to a polyvinylchloride-organic plasticizer substrate is to substantially eliminate migration of the vinyl plasticizer and adhesive solvent and thereby substantially eliminate film contraction during ageing.

### Summary of the Invention

The present invention provides an adhesive-backed film composite which, like the film composite of the Paquette patent, has a thin, flexible backing that can be decorative. Like the film composite of the Paquette composite, the adhesive layer of the novel film composite is based on an acrylic polymer and can be pressure-sensitive, although it does not need to be tacky to the touch at ordinary room temperatures, and even when its adhesive layer is nontacky to the touch, the novel film composite becomes permanently bonded at room temperature under fingertip pressure to highly plasticized substrates such as vinyl films or vinyl coated papers, fabrics or scrims containing migratable monomeric plasticizer. Such substrates are used extensively, e.g., as wall coverings, soft sided truck coverings, flexible signs and awnings. Because the adhesive is resistant to plasticizers even without crosslinking, the manufacturing expense and lowered adhesion values associated with crosslinking can be avoided.

Thus the subject invention provides an adhesive-backed film composite comprising a thin flexible backing which bears a layer of adhesive that is resistant to migratable monomeric plasticizer, thus enabling the film composite to become permanently bonded to substrates containing monomeric plasticizer, said adhesive comprising an acrylic emulsion polymer of
a) from 84 to 99 parts of an acrylic acid ester of a nontertiary alcohol, wherein said acrylic acid ester monomer is a mixture of, by weight, from 50 to 90% of ethyl acrylate and correspondingly from 50 to 10% of n-butyl acrylate, and
b) correspondingly from 16 to 1 parts by weight of a polar ethylenically unsaturated, copolymerizable monomer selected from acrylic acid, methacrylic acid, acrylamide, methacrylamide, itaconic acid, acrylonitrile, and methacrylonitrile, which polymer has been coated from an aqueous emulsion.

If the alkyl groups of the acrylic polymer had substantially greater than a weight average of five carbon atoms, the adhesive would have significantly less resistance to migratable monomeric plasticizers. If that average were substantially less than two, the adhesive would not form strong bonds to plasticized substrates under fingertip pressure at ordinary room temperatures. Optimum resistance to migratable monomeric plasticizer is achieved when the relationship of said average number of carbon atoms in the alkyl groups is from 2 to 4, more preferably from 2 to 3. By keeping that average low, the adhesive tends to have low initial adhesion values, thus enhancing repositionability, but adhesion tends to build to a desirably high level within a reasonably short period of time. Furthermore, adhesives wherein said average number of carbon atoms is low tend to have superior resistance to shear forces.

When the above-identified blend of monomers a) and b) are emulsified in a surfactant system with a free-radical initiator, polymerization readily proceeds to completion (>98% conversion) at moderately elevated temperatures, and an inherent viscosity (IV) of greater than 5.0 is readily attained without further processing. When the resulting latex is filtered, typically less than 0.01 g of coagulum per 1000 g latex is collected.

By coating the adhesive from an aqueous emulsion, the trouble and expense of inverting to solution is avoided, and it is unnecessary to employ apparatus to prevent volatiles from polluting the atmosphere.

Because the acrylic polymer is polymerized from aqueous emulsion, it has sufficiently high inherent viscosity to be useful in the novel film composite without further processing, whereas a polymer of the same monomers prepared from solution would typically have much lower molecular weight and would need to be cured (e.g., by ultraviolet radiation) to attain a satisfactorily high inherent viscosity. Furthermore, the emulsion-coated adhesive can have adhesive values equal to or greater than can be attained with a solvent-based adhesive that is otherwise identical in composition but is half again greater in thickness. Such a substantial reduction in thickness not only entails economy of raw material, but thinner adhesive layers reduce the incidence of edge-oozing that could attract dirt and also detract from the otherwise decorative nature of the novel film composite.

Acrylic copolymers of monomers a) and b) afford strong bonds to plasticized substrates, when monomer b) is polar. Polar monomers are selected from acrylic acid, methacrylic acid, acrylamide, methacrylamide, acrylonitrile, methacrylonitrile, and itaconic acid.

Monomers a) are ethyl acrylate and n-butyl acrylate, both of which are commercially available in good quantities and at reasonable cost.

Adhesives of the film composite of the invention are provided by acrylic copolymers of, by weight
from 50 to 90% of ethyl acrylate,
from 10 to 50% of n-butyl acrylate, and
from 1 to 16% of the copolymerizable, polar monomer.
Optimum resistance to migratable plasticizers is achieved when at least 65% of ethyl acrylate is employed.

More preferably, the amount of monomer b) is from 2 to 12 parts by weight. At amounts substantially above that preferred range, the adhesive tends to be too firm to enable good bonds to be formed under fingertip pressure. At amounts below that preferred range, the adhesive tends to be somewhat soft and to form bonds that are weaker than are those produced with larger amounts of monomer b).

When the inherent viscosity (IV) of the acrylic polymer is more than 5.0, it resists swelling that otherwise might occur when the plasticizer resistant novel film composite is adhered to a substrate containing migratable monomeric plasticizer. On the other hand, acrylic polymers of lower IV have higher aged adhesion values to plasticized substrates. Crosslinking further improves resistance to swelling but can reduce adhesion to some plasticized substrates to unacceptable levels.

Preferably, the acrylic polymer has a calculated Tg of from 0° to -50°C. If its Tg were substantially above that preferred range, the adhesion of the novel film composite might fail at low temperatures upon being subjected to stresses such as from impact or vibrations. If its Tg were substantially below that preferred range, the adhesive layer of the novel film composite might be too tacky to permit it to be repositioned before it has been pressed into full contact with a substrate. However, repositioning of a tacky adhesive can be provided by rupturable glass microbubbles as disclosed in U.S. Pat. No. 3,314,838 (Erwin). More preferably, the calculated Tg of the acrylic polymer is from -20° to -40°C.

### Detailed Description

The flexible backing of the novel film composite preferably is a decorative polymeric film such as polyurethane, polyolefin, and plasticized vinyl or a soft metal such as aluminum. When the backing is a polyurethane film, it is more durable when it is aliphatic. Plasticized vinyl films are currently less expensive than polyurethane films and are widely used in the graphics industry because of their versatility, durability, and low cost. When the backing is a plasticized vinyl film, its plasticizer preferably is primarily a nonmigratable polymeric plasticizer. Preferred vinyl backings are disclosed in the Paquette patent and are available as SCOTCHCAL™ Film Series 3650 and CONTROLTAC™ Film Series 180 from 3M, to which the present application is assigned.

To better ensure against wrinkling, a novel film composite that has a vinyl backing preferably incorporates a barrier layer as disclosed in the Paquette patent, thus better protecting the film backing from becoming wrinkled by migratable monomeric plasticizers of substrates to which the novel film composite may be adhered. When the IV of the acrylic polymer exceeds 5.0, there is less need for such a barrier layer.

To make the adhesive layer of the novel film composite even more effective in protecting the backing from migratable monomeric plasticizer, the acrylic emulsion polymer can be blended with a urethane heat-activatable latex adhesive such as a polyesterpolyurethane latex (e.g., "Baybond" 402A from Mobay). Furthermore, such addition enhances repositionability and tends to increase adhesive values, a surprising result considering that urethane latex adhesives, when used alone, must be heat activated.

### TESTING

### 180° Pullback Value

180° pullback adhesions are run according to ASTM D-1000, Method B, with an Instron tester. The adhesion tests are conducted on specimens after dwell as indicated.

In the following examples, all parts are by weight.

### Example 1

A titanium dioxide pigmented, plasticized poly(vinylchloride) film 50 µm in thickness while supported by a paper carrier web was coated with a 40% solids aqueous emulsion of an acrylic emulsion copolymer of 80% ethyl acrylate, 16% n-butyl acrylate, and 4% acrylic acid. The coating was dried 10 minutes at 66°C to a dry coating weight of 25 mg/m². The adhesive side was then laminated to a silicone release liner, and the paper carrier web was discarded to provide an adhesive-backed film composite of the invention.

### Example 2

A urethane backing was made by coating two layers of an aqueous polyurethane dispersion containing a predispersed pigment paste ("Disperse White" 00-2207 from BASF) on a paper casting liner. After drying the first layer, a second layer of the same material was coated over the first layer to produce a 65 µm thick film. Each coating was dried at room temperature for one minute and then in an oven at 66°C for 15 seconds and 121°C for 30 seconds. Over this urethane backing was coated a 40% solids aqueous emulsion of an emulsion copolymer of 68% ethyl acrylate, 26% n-butyl acrylate, and 6% acrylic acid. The coating was dried 10 minutes at 66°C to a dry coating weight of 25 mg/m².

### Comparative Example A

An adhesive-backed film composite was made using an acrylic solution copolymer of 90% 2-methylbutyl acrylate and 10% acrylic acid, and coating this from a 49% solids solution onto a silicone release liner, followed by heating for 10 minutes at 66°C to a dry coating weight of 67 mg/m².

### Testing of Examples 1-2

Each of the adhesive-backed film composites of Examples 1-2 and of Comparative Example A was tested for 180° Pullback Value from a vinyl substrate, viz., a poly(vinylchloride) coated polyester scrim containing 40-45 phr of monomeric plasticizer and having a weight of 19 ounces/yd² (650 g/m²). Results are in Table I.

**Table I**

| 180° Pullback Adhesion Value (N/cm) after | | | |
|---|---|---|---|
| | 24 hr, R.T. | 1 wk., 66°C | 2 wk., 66°C |
| Film Composite of | | | |
| Example 1 | 9.6 | 8.9 | 9.3 |
| Example 2 | 7.2 | 9.8 | 9.6 |
| Comp. Ex. A | 10.7 | 3.5 | 3.3 |

Data of Table I show that the adhesive-backed film composites of Examples 1-2 retain good 180° Pullback Adhesion Values after accelerated aging, but that the composite of Comparative Example A, while having a satisfactory 180° Pullback Value after one day at room temperature experiences drastically reduced values after accelerated aging.

### Example 3

An adhesive-backed film composite was made in the same manner as in Example 1 except that the acrylic emulsion copolymer was blended in equal parts solids with a 35% solids polyester-polyurethane latex ("Baybond" 402A from Mobay). The dried coating weight of the resulting adhesive layer was 25 mg/m².

The composite was tested for 180° Pullback Adhesion Values (N/cm) from a plasticized vinyl substrate, ("Duraskin" from Verseidag Industrie Textilien, West Germany) having a weight of 18 ounces/yd² (610 g/m²). Table II reports the results afer the indicated dwell.

**Table II**

| 180° Pullback Adhesion Value (N/cm) | | | | |
|---|---|---|---|---|
| Initial | 2 hr, R.T. | 24 hr, R.T. | 1 wk., 66°C | 2 wk., 66°C |
| 3.9 | 5.6 | 5.6 | 7.7 | 12.0 |

The relatively low initial adhesion reflects the good repositionability of the adhesive, but as shown after accelerated aging, adhesion built to a satisfactory level.

## Claims

1. An adhesive-backed film composite comprising a thin flexible backing which bears a layer of adhesive that is resistant to migratable monomeric plasticizer, thus enabling the film composite to become permanently bonded to substrates containing monomeric plasticizer, said adhesive comprising an acrylic emulsion polymer of
a) from 84 to 99 parts of an acrylic acid ester of a nontertiary alcohol, wherein said acrylic acid ester monomer is a mixture of, by weight, from 50 to 90% of ethyl acrylate and correspondingly from 50 to 10% of n-butyl acrylate, and
b) correspondingly from 16 to 1 parts by weight of a polar ethylenically unsaturated, copolymerizable monomer selected from acrylic acid, methacrylic acid, acrylamide, methacrylamide, itaconic acid, acrylonitrile, and methacrylonitrile, which polymer has been coated from an aqueous emulsion.

2. An adhesive-backed film composite as defined in claim 1, wherein said monomer a) comprises, by weight, at least 65% ethyl acrylate.

3. An adhesive-backed film composite as defined in any preceding claim, wherein the amount of polar monomer b) is from 2 to 12% by weight.

4. An adhesive-backed film composite as defined in any preceding claim, wherein said acrylic polymer has a calculated Tg of from 0°C to -50°C.

5. An adhesive-backed film composite as defined in any preceding claim, wherein said adhesive is uncrosslinked.

6. An adhesion backed film composite as defined in any preceding claim, wherein said backing is selected from polyurethane, polyolefin, plasticized vinyl and soft metal.

## Patentansprüche

1. Verbundfolie mit Klebstoffrückseite, umfassend eine flexible Unterlage mit einer Klebstoffschicht darauf, die gegenüber wanderungsfähigem Weichmacher resistent ist, wodurch die Verbundfolie dauerhaft auf Substrate aufgeklebt werden kann, die monomere Weichmacher enthalten, wobei der Klebstoff ein Acryl-Emulsionspolymer umfaßt aus:
(a) 84 ... 99 Teilen eines Acrylsäureesters eines nicht-tertiären Alkohohls, wobei das Acrylsäureester-Monomer ein Gemisch ist aus 50 % ... 90 Gewichtsprozent Ethylacrylat und entsprechend 50 % ... 10 Gewichtsprozent n-Butylacrylat, sowie
(b) entsprechend 16 ... 1 Gewichtsteilen eines polaren, ethylenisch ungesättigten, copolymerisierbaren Monomers, ausgewählt aus: Acrylsäure, Methacrylsäure, Acrylamid, Methacrylamid, Itaconsäure, Acrylntril, Methacrylnitril; wobei das Polymer aus einer wässrigen Emulsion aufgetragen wird.

2. Verbundfolie mit Klebstoffrückseite nach Anspruch 1, wobei das Monomer (a) mindestens 65 Gewichtsprozent Ethylacrylat umfaßt.

3. Verbundfolie mit Klebstoffrückseite nach einem der vorgenannten Ansprüche, wobei die Menge des polaren Monomers 2 % ... 12 Gewichtsprozent beträgt.

4. Verbundfolie mit Klebstoffrückseite nach einem der vorgenannten Ansprüche, wobei das Acrylpolymer eine berechnete Tg von 0 ° ... -50 °C hat.

5. Verbundfolie mit Klebstoffrückseite nach einem der vorgenannten Ansprüche, wobei der Klebstoff unvernetzt ist.

6. Verbundfolie mit Klebstoffrückseite nach einem der vorgenannten Ansprüche, wobei die Unterlage ausgewählt wird aus: Polyurethan, Polyolefin, plastifiziertem Vinyl und Weichmetall.

## Revendications

1. Film composite à revêtement adhésif comprenant un mince revêtement flexible qui porte une couche d'adhésif résistante aux plastifiants monomères susceptibles de migrer, permettant ainsi au film composite de se fixer de manière permanente aux substrats contenant un plastifiant monomère, ledit adhésif comprenant un polymère en émulsion acrylique de
a) 84 à 99 parties d'un ester d'acide acrylique d'un alcool non tertiaire, ledit monomère d'ester d'acide acrylique étant un mélange, en poids, de 50 à 90% d'acrylate d'éthyle et de façon correspondante de 50 à 10% d'acrylate de n-butyle, et
b) de façon correspondante de 16 à 1 parties en poids d'un monomère copolymérisable éthyléniquement insaturé polaire choisi parmi l'acide acrylique, l'acide méthacrylique, l'acrylamide, le méthacrylamide, l'acide itaconique, l'acrylonitrile et le méthacrylonitrile, ce polymère ayant été revêtu à partir d'une émulsion aqueuse.

2. Film composite à revêtement adhésif tel que défini dans la revendication 1, dans lequel ledit monomère a) comprend, en poids, au moins 65% d'acrylate d'éthyle.

3. Film composite à revêtement adhésif tel que défini dans l'une quelconque des revendications précédentes, dans lequel la quantité de monomère polaire b) est de 2 à 12% en poids .

4. Film composite à revêtement adhésif tel que défini dans l'une quelconque des revendications précédentes, dans lequel ledit polymère acrylique a une Tg calculée comprise entre 0°C et -50°C.

5. Film composite à revêtement adhésif tel que défini dans l'une quelconque des revendications précédentes, dans lequel ledit adhésif est non réticulé.

6. Film composite à revêtement adhésif tel que défini dans l'une quelconque des revendications précédentes, où ledit revêtement est choisi parmi le polyuréthane, les polyoléfines, le vinyle plastifié et le métal doux.
